# EUROPEAN PATENT APPLICATION

(11) **EP 4 807 164 A1**
(43) Date of publication of application: **16.09.2026**
(21) Application number: 26164800.0
(22) Date of filing: 13.03.2026
(51) Int. Cl.: F02C 7/18, F02K 3/115, F02C 7/14

(54) **HYBRID ELECTRIC ENGINE OIL TANK WITH HEAT EXCHANGE CAPABILITY**

(30) Priority: 14.03.2025 US 202519079597
(71) Applicant: RTX Corporation, Farmington, CT 06032 (US)
(72) Inventor: MORTON, Jeffrey T., Glastonbury, 06033 (US); YAZICI, Murat, Glastonbury, 06033 (US)
(74) Representative: Dehns

(57) **Abstract**

An aircraft propulsion system (20) includes a core engine (25) that is configured to drive a propulsive fan (22), at least one electric machine (64, 66, 68) that generates thermal energy during operation, a thermal management system (62) that is configured to generate a lubricant flow (80) that accepts the thermal energy generated from the at least one electric machine (64, 66, 68), an oil tank (76, 78) that is configured to supply and store lubricant from the thermal management system (62), the oil tank (76, 78) includes a heat exchange surface (104) in thermal communication with a cooling flow (84) for cooling lubricant stored within the oil tank (76, 78), and a passage (82) that is configured to direct the cooling flow (84) to the heat exchange surface (104) of the oil tank (76, 78).

## Description

### TECHNICAL FIELD

The present invention relates generally to an oil tank for aircraft propulsion system including electric machines that generate heat and more particularly to an oil tank with convection heat exchange capability.

### BACKGROUND

A turbine engine typically includes a fan section, a compressor section, a combustor section, and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. Electric motors and generators are integrated into turbine engines to improve engine efficiency and enable reductions in engine emissions. The addition and integration of electric devices can increase loads on an engine thermal management system. Increasing a capacity of a thermal management system may enable further integration of electric machines and devices into aircraft propulsion systems.

### SUMMARY

According to an aspect of the present invention, there is provided an aircraft propulsion system that, among other possible things, includes a core engine that is configured to drive a propulsive fan, at least one electric machine that generates thermal energy during operation, a thermal management system that is configured to generate a lubricant flow that accepts the thermal energy generated from the at least one electric machine, an oil tank that is configured to supply and store lubricant from the thermal management system, the oil tank includes a heat exchange surface in thermal communication with a cooling flow for cooling lubricant stored within the oil tank, and a passage that is configured to direct the cooling flow to the heat exchange surface of the oil tank.

Optionally, and in accordance with the above, the aircraft propulsion system further includes an inlet and an outlet configured to directed the cooling flow to and from the heat exchange surface of the oil tank.

Optionally, and in accordance with any of the above, the passage includes a flow path through the oil tank for directing the cooling flow over the heat exchange surface between the inlet and the outlet.

Optionally, and in accordance with any of the above, the flow path includes a plurality of separate flow paths that extend between the inlet and the outlet.

Optionally, and in accordance with any of the above, the flow path includes a plurality of crossing flow paths that extend between the inlet and the outlet.

Optionally, and in accordance with any of the above, the heat exchange surface includes a surface area of the oil tank and the oil tank includes a lubricant capacity, and a ratio of the surface area to the fluid capacity is between 6 in⁻¹ and 200 in⁻¹ (between 236 m⁻¹ and 7870 m⁻¹).

Optionally, and in accordance with any of the above, the heat exchange surface includes a surface area of the oil tank and the oil tank includes a lubricant capacity, and a ratio of the surface area to the fluid capacity is between 75 in⁻¹ and 125 in⁻¹ (between 2950 m⁻¹ and 4920 m⁻¹).

Optionally, and in accordance with any of the above, the heat exchange surface includes a surface area of the oil tank and the oil tank includes a lubricant capacity, and a ratio of the surface area to the fluid capacity is between 10 in⁻¹ and 50 in⁻¹ (between 394 m⁻¹ and 1970 m⁻¹).

Optionally, and in accordance with any of the above, the aircraft propulsion system further includes an outer nacelle that defines a radially outer surface of a bypass passage. The oil tank is disposed within the outer nacelle and the outer nacelle includes an inlet for directing a cooling flow from the bypass passage to the heat exchange surface and an outlet for directing cooling flow back into the bypass passage.

Optionally, and in accordance with any of the above, the aircraft propulsion system further includes an inner fixed structure that defines a core compartment. The oil tank is disposed within the core compartment, and the inner fixed structure includes an inlet for directing a cooling flow from a bypass passage to the heat exchange surface of the oil tank and an outlet for directing the cooling flow back to the bypass passage.

Optionally, and in accordance with any of the above, the core engine further includes a first spool and a second spool and the electric machine is coupled to at least one of the first spool and the second spool.

Optionally, and in accordance with any of the above, the core engine further includes a first spool and a second spool and the at least one electric machine includes a first motor generator that is coupled to the first spool, a second motor generator is coupled to the second spool, and at least one controller is programmed to control operation of the first motor generator and the second motor generator.

According to another aspect of the present invention, there is provided a thermal management system for an aircraft propulsion system that, among other possible things, includes a lubricant circuit for a lubricant flow that accepts thermal energy from at least one electric machine, an oil tank that is configured to provide and store lubricant, the oil tank includes a heat exchange surface in thermal communication with a cooling flow for cooling lubricant stored within the oil tank, and a passage that is configured to direct the cooling flow to the heat exchange surface of the oil tank.

Optionally, and in accordance with the above, the passage includes a flow path through the oil tank for directing the cooling flow over the heat exchange surface between an inlet and an outlet. The flow path further includes a plurality of separate flow paths that extend between the inlet and the outlet.

Optionally, and in accordance with any of the above, the passage further includes a flow path through the oil tank for directing the cooling flow over the heat exchange surface between an inlet and an outlet. The flow path further includes a plurality of crossing flow paths that extend between the inlet and the outlet.

Optionally, and in accordance with any of the above, the heat exchange surface includes a surface area of the oil tank and the oil tank includes a lubricant capacity, and a ratio of the surface area to the lubricant capacity is between 6 in⁻¹ and 200 in⁻¹ (between 236 m⁻¹ and 7870 m⁻¹).

Optionally, and in accordance with any of the above, the heat exchange surface includes a surface area of the oil tank and the oil tank includes a lubricant capacity, and a ratio of the surface area to the lubricant capacity is between 75 in⁻¹ and 150 in⁻¹ (between 2950 m⁻¹ and 5910 m⁻¹).

Optionally, and in accordance with any of the above, the heat exchange surface includes a surface area of the oil tank and the oil tank includes a lubricant capacity, and a ratio of the surface area to the lubricant capacity is between 10 in⁻¹ and 50 in⁻¹ (between 394 m⁻¹ and 1970 m⁻¹).

According to another aspect of the present invention, there is provided a method of operating a thermal management system for an aircraft propulsion system that, among other possible things, includes absorbing thermal energy with a lubricant flow in thermal communication with at least one electric machine that is coupled to a core engine structure, receiving a portion of a heated lubricant flow within an oil tank that is configured to supply and store lubricant, and cooling lubricant within the oil tank with a cooling flow that is communicated over a heat exchange surface of the oil tank.

Optionally, and in accordance with the above, the heat exchange surface includes a surface area of the oil tank and the oil tank includes a lubricant capacity, and a ratio of the surface area to the lubricant capacity is between 6 in⁻¹ and 200 in⁻¹.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example hybrid electric engine aircraft propulsion system.
Figure 2 is a simplified schematic view of an example thermal management system.
Figure 3 is a simplified schematic view of another example thermal management system.
Figure 4 is a simplified schematic view of the hybrid electric engine aircraft propulsion system.
Figure 5 is a cross-sectional schematic view of example oil tank mounting locations.
Figure 6 is a cross-sectional schematic view of another example oil tank mounting location.
Figure 7 is a cross-sectional schematic view of yet another example oil tank mounting location.
Figure 8 is a schematic view of an example oil tank.
Figure 9 is a schematic view of another example oil tank.
Figure 10 is a schematic view of yet another example oil tank.

### DETAILED DESCRIPTION

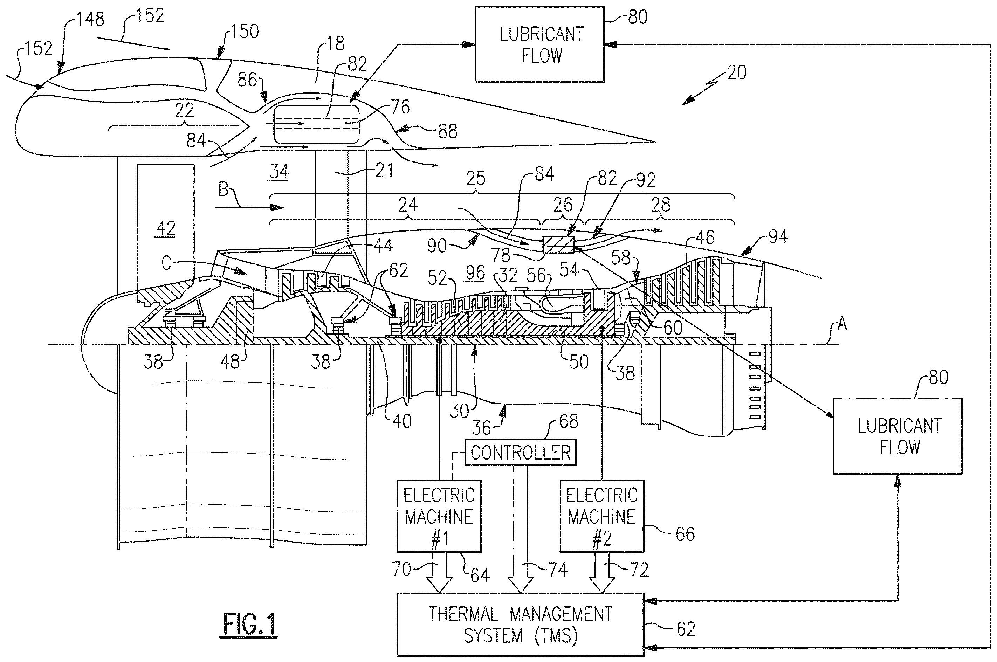

Figure 1 schematically illustrates an aircraft propulsion system 20 that includes integrated electric machines 64, 66. The electric machines 64, 66 generate heat schematically indicated by arrows 70 and 72. The electric machines 64, 66 are controlled by a controller 68 that also generates heat that is indicated by arrow 74. A thermal management system 62 circulates a lubricant flow 80 to provide lubrication and also to absorb heat from various systems in the engine and from the electric machines 64, 66. The addition of electric machines 64, 66 and the controller 68 increases heat loads accommodated by the thermal management system 62. The example thermal management system 62 includes oil tanks 76 and 78 that are in thermal communication with a cooling airflow 84 to cool stored lubricant. Cooling of lubricant within one or both of the oil tanks 76, 78 increases the amount of heat that may be accommodated by the thermal management system 62 without additional dedicated heat exchangers.

The propulsion system 20 includes a core engine 25 as a two-spool turbofan that incorporates a propulsive fan section 22, a compressor section 24, a combustor section 26 and a turbine section 28. The fan section 22 may include a single-stage fan having a plurality of fan blades 42. The fan section 22 drives air along a bypass flow path B through a bypass passage 34, and also drives air along a core flow path C for compression and communication into the combustor section 26 then expansion through the turbine section 28.

A nacelle 18 and an inner fixed structure (IFS) 94 define outer and inner surfaces of the bypass flow path B. The core engine 25 is disposed within a core compartment 96 defined by the IFS 94. The IFS 94 is shown schematically and may include structures to support the core engine 25 and any accessory system structures disposed within the core compartment 96.

Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures and/or open rotor propulsion systems.

The exemplary core engine 25 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan section 22 through a speed change mechanism, which in the exemplary propulsion system 20 is illustrated as a geared architecture 48 to drive the fan section 22 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. Although this application discloses geared architecture 48, its teaching may benefit direct drive engines having no geared architecture.

The high speed spool 32 includes an outer shaft 50 that interconnects a second (or high) pressure compressor 52 and a second (or high) pressure turbine 54. A combustor 56 is arranged in the exemplary propulsion system 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 58 includes airfoils 60 which are in the core flow path C. The turbines 46, 54 rotationally drive the respective low speed spool 30 and high speed spool 32 in response to the expansion.

It will be appreciated that each of the positions of the fan section 22, compressor section 24, combustor section 26, turbine section 28, and fan drive gear system 48 may be varied. For example, gear system 48 may be located aft of the low pressure compressor 44, or aft of the combustor section 26 or even aft of turbine section 28, and the fan section 22 may be positioned forward or aft of the location of gear system 48.

The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan section 22.

The example propulsion system 20 incorporates electric machines 64, 66 into the core engine 25 to extract or input power into the low spool 30 or the high spool 32. The electric machines 64, 66 may also be utilized to transfer power between the low spool 30 and the high spool 32. In one example embodiment, the electric machines 64, 66 are electric motor/generators. The electric motor/generators 64, 66 may provide for the extraction of power or input power into a corresponding one of the low spool 30 and the high spool 32. A controller 68 is provided that is programmed to control operation of the electric motor/generators 64, 66 as part of operation of the core engine 25.

The example controller 68 is a device and system for performing necessary computing or calculation operations of the electric machines 64, 66. The controller 68 may further comprise electrical components required for control of the electric machines that generate heat during operation. The controller 68 may be specially constructed for operation of the electric machines 64, 66, or it may comprise at least a general-purpose computer selectively activated or reconfigured by software instructions stored in a memory device. The controller 68 may further be part of full authority digital engine control (FADEC) or an electronic engine controller (EEC).

Thermal energy generated by the electric machines 64, 66 is controlled by the thermal management system 62. The thermal management system 62 generates a lubricant flow 80 that accepts thermal energy from the electric machines 64, 66.

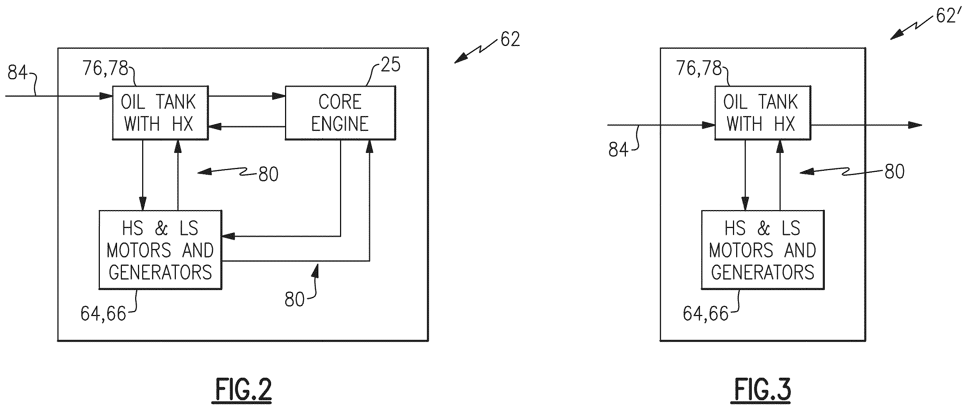

Referring to Figure 2 with continued reference to Figure 1, the example thermal management system 62 is schematically shown and provides a lubricant flow 80 to both the electric machines 64, 66 and to elements of the core engine 25. The lubricant flow 80 absorbs thermal energy and circulates back to at least one of the oil tanks 76, 78. Each of the oil tanks 76, 78 is configured to dissipate heat by providing thermal communication between lubricant within each oil tank 76, 78 and a cooling airflow 84 in a passage 82 in thermal communication with a heat exchange surface of a corresponding oil tank 76, 78.

The term oil tank as used in this invention is directed toward a structure for the storage of substantial amount of lubricant (e.g., more than one (1) pint, one (1) quart, etc.). The storage of lubricant includes a substantial amount of static lubricant rather than a constantly flowing lubricant as may be provided in a heat exchanger. Accordingly, the example oil tanks are containers where lubricant may be stored during engine off conditions and include a substantial quantity of static lubricant. Moreover, the example oil tanks may each include an opening to enable filling.

In one example embodiment, the cooling airflow 84 is provided from an inlet 86 to the passage 82 and exhausted through an outlet 88 back into the bypass passage 34 (see FIG. 1). In one example embodiment, the heat exchange surface of each of the oil tanks 76, 78 includes substantially all of the surface area of each tank. Accordingly, the inlet 86, passage 82 and outlet 88 provide for communication of the cooling airflow 84 along most of the outer surface of the oil tank 76, 78.

In one example embodiment, the oil tanks 76, 78 provide lubricant to absorb heat from both the core engine 25 and the electric machines 64, 66. The features cooled in the core engine 25 may include the bearing systems 38, the geared architecture 48 as well as any other components that require cooling. Moreover, the lubricant flow 80 may also be utilized to absorb thermal energy from other systems within the aircraft including generator systems, battery system, avionics, and any other heat producing systems.

The cooling airflow 84 is provided through a passage 82 in communication with a bypass airflow or an airflow external to the nacelle and turbine engine. The example cooling airflow 84 is disclosed as a portion of the bypass flow communicated from the bypass passage 34. However, the cooling airflow 84 may be communicated from outside the nacelle, or from other locations within the propulsion system.

In one example embodiment shown in Figure 1, a forward inlet 148 communicates an external airflow 152 to the passage 82. In another example embodiment also shown in Figure 1, an external inlet 150 communicates the external airflow 152 to the oil tank 76. The forward inlet 148 and the external inlet 150 may be a raised scoop, a flush opening, or a flush scoop (e.g., NACA duct). The example inlets 148, 150 are located at discreet circumferential locations and are not full annular about the engine axis A. The inlets 148, 150 may be configured to optimize the communication of the cooling airflow 152 to the passage 82 at the oil tank 76.

In one example embodiment shown in Figure 1, the oil tank 76 is mounted such that inlet airflow 84 are bypassed around a fan exit guide vane 21. However, the oil tank 76 and thereby the inlet 86 and the outlet 88 may be disposed forward or aft of the fan exit guide vane 21 and remain with the scope of this invention. Moreover, the oil tank 76 may be arranged at other locations within the nacelle 18 and remain within the contemplation and scope of this invention.

Additionally, cooling flows other than air may be utilized for cooling and are within the contemplation and scope of this invention. Examples of other cooling flows that may be used instead of or in addition to air flows include pressurized core flows, bleed air flows, hydraulic fluid flows, fuel flows and any other flow capable of accepting heat from lubricant disposed within the oil tanks 76, 78.

Referring to Figure 3, another example thermal management system 62' embodiment may include the oil tanks 76, 78 that are dedicated to providing the cooling lubricant flow 80 to only the electric machines 64, 66. The example thermal management system 62' is configured to operate independent of systems that accommodate thermal energy produced by the core engine 25 and/or other aircraft heat producing systems and components.

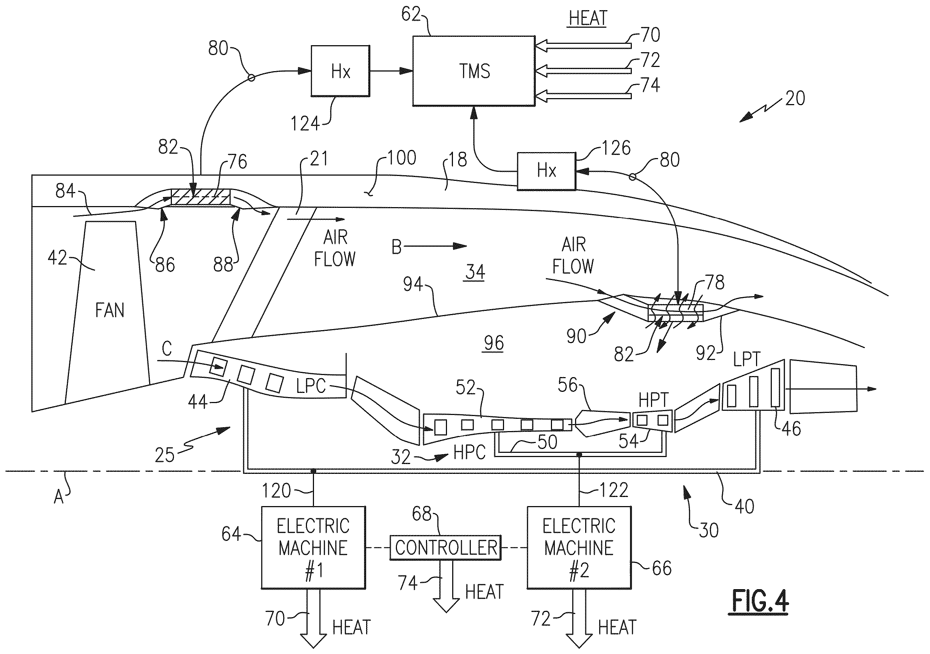

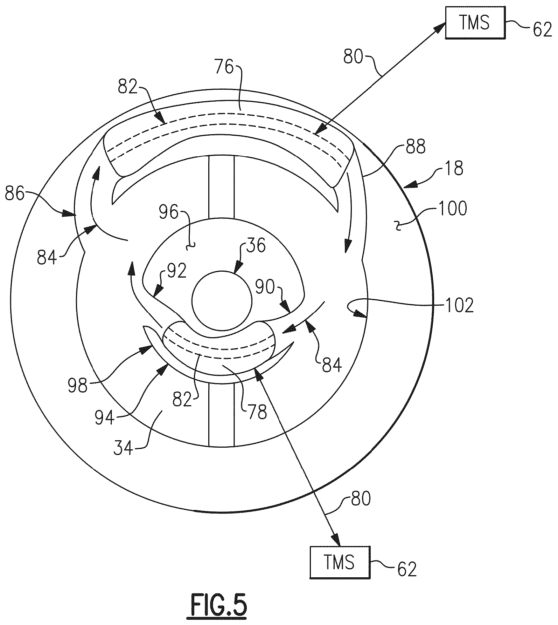

Referring to Figures 4 and 5 with continued reference to Figure 1, the example propulsion system 20 is shown in a simplified schematic view with the oil tank 76 disposed within a compartment 100 disposed within the nacelle 18. The nacelle 18 defines an outer radial surface 102 of the bypass passage 34 (Figure 5). The oil tank 76 receives the cooling airflow 84 through an inlet 86. In the example embodiment, the inlet 86 is open to the bypass passage 34 such that a portion of a bypass flow is communicated to a heat exchange surface of the oil tank 76. In the disclosed examples, the heat exchange surface includes substantially the entire surface of the oil tank 76. An outlet 88 directs airflow exhausted from the oil tank 76 back into the bypass passage 34 downstream of the inlet 86.

The oil tank 78 is disposed within the core compartment 96 within a space between the engine static structure 36 and the IFS 94 that surrounds the core engine 25. The IFS 94 defines the radially inner surface 98 (Figure 5) of the bypass passage 34. The core compartment 96 includes a space between the engine static structure 36 of the core engine 25 and the IFS 94. An inlet 90 communicates a portion of the bypass flow as the cooling airflow 84 to the oil tank 78. An outlet 92 directs air exhausted from the oil tank 78 back into the bypass passage 34 downstream of the inlet 90.

Although the example oil tanks 76, 78 are shown and described as being located within the outer nacelle 18 and the IFS 94, the oil tanks 76, 78 may be located at other locations within the propulsion system 20 and remain within the contemplation and scope of this invention. Moreover, although two oil tanks 76, 78 are shown and described by way of example, either of the oil tanks 76, 78 may be utilized alone and remain within the scope and contemplation of this invention. Furthermore, additional oil tanks 76, 78 may be utilized and arranged throughout the propulsion system and remain with the contemplation of this invention.

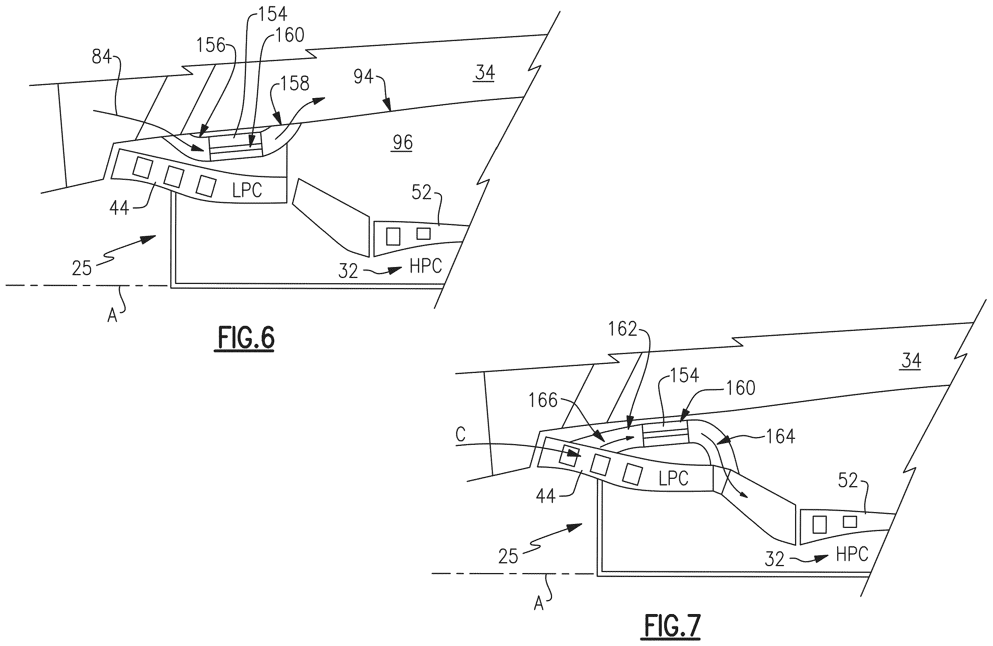

Referring to Figure 6, an oil tank 154 is shown disposed within the core compartment 96 near the low pressure compressor 44. An inlet 156 communicates bypass cooling airflow 84 into a passage 160 that is in thermal communication with the heat transfer surface of the oil tank 154. An outlet 158 directs exhausted cooling air flow back into the bypass passage 34. The location of the example oil tank 154 is shown as an example. The example oil tank 154 is shown near the low pressure compressor 44, but may be located anywhere within the aircraft propulsion system and remain with the contemplation of this invention.

The disclosed oil tanks are configured to dissipate between 5 kilowatts (KW) and 180 KW of heat from stored lubricant. The amount of heat dissipated through each oil tank will vary with the amount of heat present, the size of the tank and the size of the engine. Moreover, heat dissipation may be spread across several tanks arranged at different locations within the propulsion system 20. Although, a range of heat dissipation is disclosed by way of example, other ranges of possible heat dissipation are within the contemplation and scope of this invention.

Referring to Figure 7, in another example embodiment, the oil tank 154 receives a portion of the core flow 166 drawn from a location within the low pressure compressor 44. The core flow 166 is directed through an inlet 162 to the passage 160 and the oil tank 154. The core flow 166 is heated by lubricant within the oil tank 154 and directed through an outlet 164 back into the core flow path. The use of a portion of the core flow 166 is an example of an alternate cooling flow that may be utilized to remove heat from the oil tank 154. It should be appreciated, that the core flow 166 may be drawn from and returned to other portions of the low pressure compressor 44, the high pressure compressor 52 or other locations along the core flow path that provide a cooling air flow capable of absorbing thermal energy from oil with the oil tank 154.

Referring back to Figure 4, the example electric machines 64, 66 are coupled to a corresponding one of the low spool 30 and the high spool 32. A first coupling 120 between the first electric machine 64 and the low spool 30 is schematically shown. A second coupling 122 between the second electric machine 66 and the high spool 32 is schematically shown. Each of the couplings 120, 122 may include a mechanical coupling through a gear system, clutch system or any other coupling system and remain within the contemplation of this invention.

Each of the oil tanks 76, 78 provide for the storage of a quantity of lubricant that is utilized by the thermal management system 62. The example thermal management system 62 may include heat exchangers 124, 126 that provide cooling of the lubricant flows 80. Moreover, the heat exchangers 124, 126 may provide for communication of heat to other flows that require heating. The heat exchangers 124, 126 are schematically shown and described to illustrate that the thermal management system 62 includes a capacity for accepting and controlling thermal energy.

The addition of the electric machines 64, 66 and the corresponding controller 68 increases the amount of thermal energy generated and therefore an additional capacity for accepting and controlling thermal energy may be necessary. In some engine architectures, adding additional heat exchangers, and/or increasing the capacity of existing heat exchangers can complicate construction and operation of the propulsion system 20. Accordingly, in the example propulsion system 20, the oil tanks 76, 78 are configured with a capacity to dissipate thermal energy in addition to the lubricant storage function.

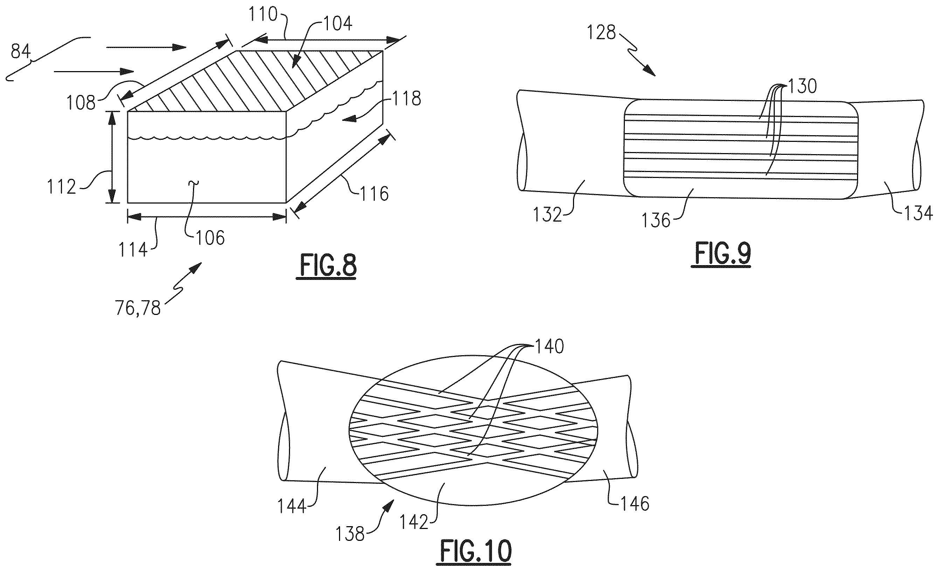

Referring to Figure 8, with continued reference to Figures 4 and 5, the example oil tanks 76, 78 are schematically shown and include a heat exchange surface 104 that is exposed to the cooling airflow 84. The heat exchange surface 104 includes a surface area that is defined by a width 108 and length 110. The example heat exchange surface 104 is illustrated as a rectangular surface, however, the heat exchange surface 104 may be shaped and formed in complex geometries to encourage and optimize thermal communication and/or to augment the surface area. Moreover, the heat exchange surface 104 is shown schematically on one side, however, the heat exchange surface 104 may include all external surfaces of the oil tank.

Each oil tank 76, 78 has the primary function of storing lubricant that is circulated throughout passages, conduits, seals, and other components for lubricating and cooling rotating parts. Accordingly, each oil tank 76, 78 has a lubricant capacity, or volume 106 that is configured to store sufficient lubricant 118 needed to support engine operation. The capacity of the oil tank 76 is a volume that is determined by a depth 112, width 114 and a length 116. The volume of the tank represents a maximum capacity for lubricant and is not necessarily indicative of the actual amount of lubricant stored within the tank.

A rectangular tank is shown by way of example, however the oil tank maybe round, oval, or shaped with a complex geometry that is configured to fit within a defined space. Accordingly, the volume of the tank may be determined by other means that correspond with the tank geometry. Moreover, the tank will have a lubricant capacity that may exceed that amount of actual lubricant 118 stored for use in engine operation.

Each of the example oil tanks 76, 78 have a heat dissipation capacity that is determined by a relationship between a surface area of the heat exchange surface 104 and the lubricant capacity 106. The lubricant capacity is the volume of the tank, not the amount of lubricant that is actually maintained or intended for the tank. The disclosed relationship is defined by the following formula. $Heat dissipation capacity \left({in}^{- 1}\right) = Surface Area \left({in}^{2}\right) / Lubricant capacity \left({in}^{3}\right) .$

The surface area includes the heat exchange surface as well as any other surface of the oil tank. The disclosed relationship quantifies the heat dissipation capacity of the oil tank according to this invention. The heat dissipation capacity parameter as explained in this invention is not a parameter applicable to other heat dissipating devices, such as heat exchangers where two moving fluids are in thermal communication. The example oil tanks provide heat dissipation between a substantially static quantity of lubricant and a moving cooling flow. The parameter is provided to encompass oil tanks of various sizes and shapes that are scaled to service propulsion systems of different thrust classes and operational configurations.

The heat exchange surface of the disclosed oil tanks includes substantially the entire surface of the oil tank. Accordingly, the terms heat exchange surface and surface area are interchangeably utilized and described. In one example embodiment, the oil tank may have a surface area between 4,500 in² and 720,000 in² (between 2.90 m² and 465 m²). In another example embodiment, the oil tank may have exchange surface 104 may between 12,000 in² and 2,000,000 in² (between 7.74 m² and 1290 m²). In one example embodiment, the volume of the oil tank is between 750 in³ and 3,600 in³ (between 0.0123 m³ and 0.0590 m³). In another example embodiment, the volume of the oil tank is between 2,000 in³ and 10,000 in³ (between 0.0328 m³ and 0.164 m³).

In one example embodiment, the heat dissipation capacity of an example oil tank is between 6 in⁻¹ and 200 in⁻¹ (between 236 m⁻¹ and 7870 m⁻¹). In another example embodiment, the heat dissipation capacity is between 75 in⁻¹ and 125 in⁻¹ (between 2950 m⁻¹ and 4920 m⁻¹). In still another example embodiment, the heat dissipation capacity of each oil tank is between 10 in⁻¹ and 50 in⁻¹ (between 394 m⁻¹ and 1970 m⁻¹). Although several example ranges are disclosed by way of example, other ranges within the broader heat dissipation capacity range may be utilized and are within the contemplation and scope of this invention.

Heat dissipation is provided through the thermal communication between the cooling airflow and lubricant stored within the tank. Accordingly, thermal energy is transferred through walls of the tank by way of convection. Other heat transfer means may also occur through conduction based on the configuration of the oil tank and surrounding engine structure and are within the contemplation of this invention.

Referring to Figure 9, an example oil tank 128 is shown schematically and includes a plurality of separate flow paths 130 though a tank volume 136. The example flow paths 130 are parallel to each other and extend from an inlet 132 to an outlet 134 through the tank volume 136. The heat exchange surface includes the outer surface area of each tank as well as the walls of each of the flow paths 130 through the tank volume 136. The flow paths 130 increase the surface area of the oil tank to provide additional area for the dissipation of heat.

In the example shown in Figure 9, the flow paths 130 are straight through a rectangularly shaped tank volume 136. However, the flow paths 130 need not extend straight through, but may be arranged to define flow paths that optimize thermal communication through the tank volume 136. Moreover, the tank 128 need not be rectangular, but may be shaped in a complex manner to adapt to the mounting location within the propulsion system 20.

Referring to Figure 10, another example oil tank 138 is shown schematically and includes a plurality of crossing flow paths 140. The plurality of crossing flow paths 140 intersect at locations between an inlet 144 and an outlet 146. The oil tank 138 includes a tank volume 142 where lubricant is stored and placed in thermal communication with a cooling airflow communicated through the flow paths 140. The heat exchange surface of the oil tank 138 includes the surfaces of each of the flow paths 140. The intersecting paths 140 are an example of a configuration that increases heat exchange surface area, and thereby, the heat dissipation capacity of the oil tank 138.

The example flow paths 130, 140 of the respective tanks 128, 138 may include different cross-sectional areas determined to further improve thermal communication. The cross-sectional area of the flow paths 130, 140 may be circular, oval, rectangular or any other geometric shape that provides thermal communication between the cooling airflow and lubricant stored within the tank volume.

The disclosed oil tanks provide additional heat dissipation capacity while maintaining the primary function of storing lubricant for use throughout the engine. Moreover, the disclosed oil tanks enable increases in a capacity of an engine thermal management system to accommodate and control thermal energy without increases in heat exchanger size and/or number.

Although an example embodiment has been disclosed, a worker of ordinary skill in this art would recognize that certain modifications would come within the scope of this invention. For that reason, the following claims should be studied to determine the scope and content of this invention.

## Claims

1. An aircraft propulsion system (20) comprising:
a core engine (25) configured to drive a propulsive fan (22);
at least one electric machine (64, 66, 68) that generates thermal energy during operation;
a thermal management system (62; 62') configured to generate a lubricant flow (80) that accepts the thermal energy generated from the at least one electric machine (64, 66, 68);
an oil tank (76, 78) configured to supply and store lubricant from the thermal management system (62; 62'), the oil tank (76, 78) comprising a heat exchange surface (104) in thermal communication with a cooling flow (84) for cooling lubricant stored within the oil tank (76, 78); and
a passage (82) configured to direct the cooling flow (84) to the heat exchange surface (104) of the oil tank (76, 78).

2. The aircraft propulsion system (20) as recited in claim 1, further comprising an inlet (86) and an outlet (88) configured to direct the cooling flow (84) to and from the heat exchange surface (104) of the oil tank (76, 78).

3. The aircraft propulsion system (20) as recited in claim 2, wherein the passage (82) comprises a flow path through the oil tank (76, 78) for directing the cooling flow (84) over the heat exchange surface (104) between the inlet (86) and the outlet (88).

4. The aircraft propulsion system (20) as recited in claim 2 or 3, wherein the flow path (84) comprises a plurality of separate flow paths (130) that extend between the inlet (132) and the outlet (134).

5. The aircraft propulsion system (20) as recited in claim 2 or 3, wherein the flow path (84) comprises a plurality of crossing flow paths (140) that extend between the inlet (144) and the outlet (146).

6. The aircraft propulsion system (20) as recited in any preceding claim, wherein the heat exchange surface (104) comprises a surface area of the oil tank (76, 78) and the oil tank (76, 78) comprises a lubricant capacity (106), and a ratio of the surface area to the lubricant capacity (106) is between 6 in⁻¹ and 200 in⁻¹ (between 236 m⁻¹ and 7870 m⁻¹).

7. The aircraft propulsion system (20) as recited in any preceding claim, wherein the heat exchange surface (104) comprises a surface area of the oil tank (76, 78) and the oil tank (76, 78) comprises a lubricant capacity (106), and a ratio of the surface area to the lubricant capacity (106) is:
between 75 in⁻¹ and 125 in⁻¹ (between 2950 m⁻¹ and 4920 m⁻¹); or
between 10 in⁻¹ and 50 in⁻¹ (between 394 m⁻¹ and 1970 m⁻¹).

8. The aircraft propulsion system (20) as recited in any preceding claim, further comprising an outer nacelle (18) defining a radially outer surface (102) of a bypass passage (34), wherein the oil tank (76) is disposed within the outer nacelle (18) and the outer nacelle (18) includes an inlet (86) for directing a cooling flow (84) from the bypass passage (34) to the heat exchange surface (104) and an outlet (88) for directing cooling flow (84) back into the bypass passage (34).

9. The aircraft propulsion system (20) as recited in any of claims 1 to 7, further comprising an inner fixed structure (94) defining a core compartment (96), wherein the oil tank (78) is disposed within the core compartment (96), and the inner fixed structure (94) includes an inlet (90) for directing a cooling flow (84) from a bypass passage (34) to the heat exchange surface (104) of the oil tank (78) and an outlet (92) for directing the cooling flow (84) back to the bypass passage (34).

10. The aircraft propulsion system (20) as recited in any preceding claim, wherein:
the core engine (25) further comprises a first spool (30) and a second spool (32) and the at least one electric machine (64, 66) is coupled to at least one of the first spool (30) and the second spool (32); or
the core engine (25) further comprises a first spool (30) and a second spool (32) and the at least one electric machine (64, 66, 68) comprises a first motor generator (64) coupled to the first spool (30), a second motor generator (66) coupled to the second spool (32), and at least one controller (68) programmed to control operation of the first motor generator (64) and the second motor generator (66).

11. A thermal management system (62; 62') for an aircraft propulsion system (20) comprising:
a lubricant circuit for a lubricant flow (80) that accepts thermal energy from at least one electric machine (64, 66, 68);
an oil tank (76, 78) configured to provide and store lubricant, the oil tank (76, 78) comprising a heat exchange surface (104) in thermal communication with a cooling flow (84) for cooling lubricant stored within the oil tank (76, 78); and
a passage (82) configured to direct the cooling flow (84) to the heat exchange surface (104) of the oil tank (76, 78).

12. The thermal management system (62; 62') as recited in claim 11, wherein:
the passage (82) comprises a flow path through the oil tank (76, 78) for directing the cooling flow over the heat exchange surface (104) between an inlet (132) and an outlet (134), the flow path further comprising a plurality of separate flow paths (130) that extend between the inlet (132) and the outlet (134); or
the passage (82) comprises a flow path through the oil tank (76, 78) for directing the cooling flow over the heat exchange surface (104) between an inlet (144) and an outlet (146), the flow path further comprising a plurality of crossing flow paths (140) that extend between the inlet (144) and the outlet (146).

13. The thermal management system (62; 62') as recited in claim 11 or 12, wherein the heat exchange surface (104) comprises a surface area of the oil tank (76, 78), the oil tank (76, 78) comprising a lubricant capacity (106), and a ratio of the surface area to the lubricant capacity (106) is:
between 6 in⁻¹ and 200 in⁻¹ (between 236 m⁻¹ and 7870 m⁻¹); or
between 75 in⁻¹ and 150 in⁻¹ (between 2950 m⁻¹ and 5910 m⁻¹); or
between 10 in⁻¹ and 50 in⁻¹ (between 394 m⁻¹ and 1970 m⁻¹).

14. A method of operating a thermal management system (62; 62') for an aircraft propulsion system (20) comprising:
absorbing thermal energy with a lubricant flow (80) in thermal communication with at least one electric machine (64, 66, 68) coupled to a core engine structure (30, 32);
receiving a portion of a heated lubricant flow (80) within an oil tank (76, 78) configured to supply and store lubricant; and
cooling lubricant within the oil tank (76, 78) with a cooling flow communicated over a heat exchange surface (104) of the oil tank (76, 78).

15. The method as recited in claim 14, wherein the heat exchange surface (104) comprises a surface area of the oil tank (76, 78) and the oil tank (76, 78) comprises a lubricant capacity (106), and a ratio of the surface area to the lubricant capacity (106) is between 6 in⁻¹ and 200 in⁻¹ (between 236 m⁻¹ and 7870 m⁻¹).
